# EUROPÄISCHE PATENTSCHRIFT

(11) **EP 2 500 576 B1**
(45) Veröffentlichungstag und Bekanntmachung des Hinweises auf die Patenterteilung: **29.06.2016**
(21) Anmeldenummer: 11002072.4
(22) Anmeldetag: 12.03.2011
(51) Int. Cl.: F04D 13/06, F04D 29/02, F04D 29/42, H02K 5/128, H02K 5/22

(54) **Heizungsumwälzpumpe**
Heat circulation pump
Pompe de recirculation de chauffage

(43) Veröffentlichungstag der Anmeldung: 19.09.2012
(73) Patentinhaber: Grundfos Management a/s, 8850 Bjerringbro (DK)
(72) Erfinder: Høj, Finn Mathiesen, 8200 Aarhuis N (DK); Blad, Thomas, 8850 Bjerringbro (DK)
(74) Vertreter: Vollmann, Heiko

(56) Entgegenhaltungen:
- EP-A1- 1 437 819
- EP-A1- 2 072 828
- EP-A1- 2 166 230
- WO-A1-2008/019818
- DE-A1- 4 418 166
- DE-A1-102007 022 070
- DE-B3-102004 030 721

## Beschreibung

Die Erfindung betrifft eine Heizungsumwälzpumpe mit den im Oberbegriff des Anspruchs 1 angegebenen Merkmalen.

Derartige Heizungsumwälzpumpen zählen zum Stand der Technik. Sie weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motorgehäuse, insbesondere das Statorgehäuse mit dem Pumpengehäuse verbunden ist. Zum elektrischen Anschluss des Motors ist ein Klemmenkasten vorgesehen, welcher an der vom Pumpengehäuse abgewandten Axialseite des Statorgehäuses angeordnet ist. Der Klemmenkasten umfasst typischerweise auch die Motorelektronik, also beispielsweise einen Frequenzumrichter. Eine Heizungspumpe der vorgenannten Art ist beispielsweise aus DE 10 2004 030 721 B3 bekannt.

Derartige Heizungsumwälzpumpen kleiner und mittlerer Bauart werden in Großserien hergestellt, weshalb auch kleinste Verbesserungen schon große Einsparungen bei Fertigung und/oder Montage bedeuten können. Es ist ein stetes Bestreben diese Pumpen einerseits technisch weiter zu verbessern und noch zuverlässiger zu gestalten andererseits die Herstellungs- und Montagekosten zu senken.

Diese Aufgabe wird gemäß der Erfindung durch eine Heizungsumwälzpumpe mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Die erfindungsgemäße Heizungsumwälzpumpe weist ein Pumpengehäuse mit darin angeordnetem Pumpenlaufrad auf, das von einem Elektromotor angetrieben ist, der in einem mit dem Pumpengehäuse verbundenen Motorgehäuse angeordnet ist. Am Motorgehäuse ist ein Klemmenkasten aus Kunststoff befestigt, der zur Aufnahme von elektrischen und/oder elektronischen Bauteilen der Motorsteuerung sowie zum elektrischen Anschluss des Motors vorgesehen und ausgebildet ist. Am Motorgehäuse ist weiterhin ein Erdungskontakt angeordnet. Außen am Klemmenkasten ist ein Stecker oder eine Muffe einer elektrischen Steckverbindung angeordnet, die zum elektrischen Anschluss des Motors bzw. der vorgeschalteten Motorelektronik vorgesehen ist. Dabei ist der Erdungskontakt am Motorgehäuse elektrisch leitend mit einem Erdungskontakt des Steckers oder der Muffe sowie mit mindestens einem Leiter im Inneren des Klemmenkastens verbunden. Gemäß der Erfindung ist die elektrische Verbindung zwischen dem am Motorgehäuse angeordneten Erdungskontakt und dem Erdungskontakt des Steckers oder der Muffe außerhalb des Klemmenkastens angeordnet.

Grundgedanke der erfindungsgemäßen Lösung ist es, die elektrische Verbindung zwischen dem motorseitigen Erdungskontakt und dem stecker- bzw. muffenseitigen Erdungskontakt außerhalb des Klemmenkastens anzuordnen, um auf diese Weise zu ermöglichen, dass die elektrische Verbindung zwischen dem motorgehäuseseitigen Erdungskontakt und dem Stecker- bzw. muffenseitigen Erdungskontakt außerhalb des Klemmenkastens zumindest außerhalb des Inneren des Klemmenkastens geführt werden kann. Eine solche Anordnung hat den Vorteil, dass die sonst beim Stand der Technik einhergehende thermische Kopplung zwischen Motorgehäuse und Klemmenkasten über die Erdung weitgehend vermieden werden kann, was insbesondere dann von Vorteil ist, wenn das Motorgehäuse gegenüber dem Klemmenkasten vergleichsweise warm oder vergleichsweise kalt ist.

Besonders vorteilhaft ist es dabei, wenn der Erdungskontakt des Steckers oder der Muffe abgezweigt ausgebildet ist, wobei die Abzweigung außerhalb des Klemmenkastens oder innerhalb der Klemmenkastenwandung liegt. Es erfolgt dann zwar nach wie vor eine Verbindung der Erdung mit mindestens einem Leiter in Inneren des Klemmenkastens, typischerweise auf einer darin befindlichen Platine, jedoch ist die elektrische Verbindung zum Stecker oder zur Muffe vom Erdungskotakt derselben quasi unter Umgehung des Klemmenkastens direkt zum Stecker oder der Muffe geführt, die am Klemmenkasten angeformt und zum elektrischen Anschluss vorgesehen ist. Durch die erfindungsgemäße Lösung wird erreicht, dass der Klemmenkasten, insbesondere die darin angeordneten wärmeempfindlichen Bauteile einer geringeren thermischen Belastung ausgesetzt sind, da die Wärmeleitung zwischen dem Motorgehäuse, welches die im Motor entstehende Abwärme ableitet, soweit sie über den Erdungskontakt erfolgt, teilt, sodass nur noch ein Teil der über den Erdungskontakt geführten Wärme in den Klemmenkasten geleitet und bei geeigneter Ausgestaltung ein Großteil dieser Wärme unter Umgehung des Klemmenkastens direkt zum Stecker bzw. zur Muffe geleitet wird. Zwar wird durch diese Wärmeleitung die Erdungsleitung des Anschlusskabels thermisch höher belastet als bei bekannten Lösungen, doch ist dies unproblematisch, da über die Leitungslänge die Wärme in der Regel problemlos abgebaut werden kann. Die vom Motorgehäuse über den Erdungskontakt in den Klemmenkasten eingebrachte Wärme ist jedoch deutlich geringer als bei bekannten Konstruktionen, da durch die Abzweigung außerhalb des Klemmenkastens oder innerhalb der Klemmenkastenwandung auch eine Abzweigung der Wärmeströme erfolgt, sodass bei geeigneter Ausbildung ein Großteil der über den Erdungskontakt geführten Wärme gar nicht erst in den Klemmenkasten gelangt.

Ein weiterer Vorteil der erfindungsgemäßen Lösung ist nicht nur bei Seitens des Motors anstehender Wärme sondern auch umgekehrt bei dort anstehender Kälte gegeben, wie es beispielsweise bei einer Kühlmittelpumpe der Fall sein kann. Nun wird durch die erfindungsgemäße Ausbildung erreicht, dass das Klemmenkasteninnere nicht über diesen Erdungskontakt abgekühlt wird, was zu Kondenswasserbildung und Schäden an der Elektronik führen kann.

Wenn die Abzweigung in der Klemmenkastenwandung liegt, ist diese vorteilhaft in einer Seitenwand oder im Boden des Klemmenkastens vorgesehen.

Um den Wärmestrom in den Klemmenkasten durch den Erdungskontakt möglichst klein zu halten, ist gemäß der Erfindung vorgesehen, dass der in das Innere des Klemmenkastens führende Teil des Kontaktes einen kleinere Querschnitt als der zum Stecker oder zur Muffe führende Teil hat. Entsprechend der Querschnittsabmessungen erfolgt auch eine Aufteilung der Wärmeströme, sodass bei geeigneter Dimensionierung ein Großteil des vom Motorgehäuse an den Erdungskontakt abgegebenen Wärmestroms nicht in den Klemmenkasten sondern an diesem vorbei zum Stecker bzw. zur Muffe hin gelangt und dort an das Anschlusskabel und an die Außenumgebung abgeleitet werden kann.

Vorteilhaft ist der Erdungskontakt so ausgebildet und angeordnet, dass er zu zwei Kontaktbeinen abgezweigt ist, von denen ein Bein in das Motorgehäuse eingreift und das andere Bein an der Außenseite des Motorgehäuses mit Abstand dazu angeordnet ist und Teil des Steckers bzw. der Muffe bildet. Bei einer solchen Anordnung kann die Abzweigung außerhalb der Klemmenkastenwandung großflächig vorgesehen sein, was wärmetechnisch besonders günstig ist.

Vorteilhaft ist der Kontakt, insbesondere der Erdungskontakt als Blechteil ausgebildet, das durch Stanzen gebildet ist. Derartige Kontakte sind kostengünstig herstellbar.

Zum Anschluss des Motors sind im Stecker oder in der Muffe zwei oder mehr zueinander elektrisch isolierte Kontakte vorgesehen. Diese sind gemäß einer vorteilhaften Weiterbildung der Erfindung baugleich mit dem Erdungskontakt und mit Abstand zueinander und zum Erdungskontakt angeordnet, wobei die nicht Erdungskontakte auch zum Motorgehäuse hin in Kunststoff eingebettet sind, der einen Teil des Klemmenkastens und/oder des Steckers bzw. der Muffe bildet. Eine solche Ausbildung ist besonders vorteilhaft, da sowohl für den Erdungskontakt als auch für die übrigen Kontakte gleiche Bauteile verwendet werden können, was die Teilevielfalt bei der Herstellung und die Handhabung insbesondere bei der Zuführung der Teile erheblich vereinfacht.

Dabei ist es besonders vorteilhaft, wenn der Erdungskontakt motorseitig in einer gegenüber der übrigen Wandung des Motorgehäuses erhabenen Vorsprung oder Erhebung eingreift. Dann nämlich ist neben diesem Vorsprung genügend Freiraum, in dem die übrigen Kontakte mit ihrem dort in Kunststoff eingebetteten Kontakten den erforderlichen Einbauraum finden.

Besonders vorteilhaft ist es, wenn der Erdungskontakt quer zur Einsteckrichtung mindestens einseitig aufgeweitet ausgebildet ist und zumindest in Höhe des aufgeweiteten Bereichs oder auch darüber hinaus eine Materialausnehmung aufweist. Hierdurch kann eine besonders intensive Kontaktierung mit dem Motorgehäuse hergestellt werden. Dann kann die motorgehäuseseitige Ausnehmung, insbesondere im Vorsprung der Wandung des Motorgehäuses in Steckrichtung des Kontaktes gerade ausgebildet sein, was insbesondere bei metallischen Gehäusen, die in Gusstechnik hergestellt werden, von Vorteil ist. Die Kontaktierung erfolgt dadurch intensiv, dass die Aufweitung größer als die lichte Weite der motorseitigen Ausnehmung ist, also dass der Erdungskontakt in diesem Bereich zumindest elastisch möglicherweise auch plastisch verformt wird. Um genügend Freiraum zur Aufnahme der Materialverformung zu gewährleisten, ist eine Materialausnehmung in Höhe der Aufweitung oder darüber hinaus vorgesehen, beispielsweise durch einen Schlitz oder dergleichen. Auf diese Weise wird eine sichere Kontaktierung zwischen dem Erdungskontakt und dem Motorgehäuse sichergestellt, ohne dass fertigungstechnisch zusätzlicher Bauaufwand erfolgt.

Insbesondere beim Einsatz hochtourig laufender Permanentmagnetmotoren ist es von Vorteil, wenn der Klemmenkasten an der vom Pumpengehäuse abgewandten Axialseite des Motorgehäuses anschließt, da dann genügend Raum für die Aufnahme der Motorelektronik geschaffen werden kann und zwar im Wesentlichen unabhängig von der radialen und axialen Ausdehnung des Motors, insbesondere des Stators. Bei einer solchen axialen Anordnung des Klemmenkastens, d. h. wenn der Klemmenkasten in Achsrichtung der Motorwelle gesehen auf der von der Pumpe abgewandten Seite des Motorgehäuses angeordnet ist, dann ist es vorteilhaft den Stecker oder die Muffe zum Anschluss an der radialen Außenseite des Motorgehäuses und/oder des Klemmenkastens anzuordnen. Bei der vorgenannten Motorbauart ist der Motor häufig im Vergleich zur Pumpe schlanker ausgebildet. Auch weist die Pumpe Saug- und Druckstutzen auf, die bedingen, dass seitliche Freiräume entstehen, die häufig ungenutzt sind. Es ist daher vorteilhaft, in diesen Bereich den Stecker oder die Muffe anzuordnen, da dies die axiale Baulänge der Pumpe nicht vergrößert und räumlich Bereiche nutzt, die ohnehin gegeben und sonst nicht nutzbar sind. Dabei ist es insbesondere vorteilhaft, den Stecker oder die Muffe versetzt zum Klemmenkasten, vorzugsweise neben dem Motorgehäuse anzuordnen und zwar so, dass die Steckrichtung parallel zur Drehachse von Motor und Pumpe ist. Diese Anordnung hat auch den Vorteil, dass zum Aufstecken des Gegensteckers oder der Gegenmuffe kein zusätzlicher Freiraum benötigt wird, jedenfalls nur geringer radialer Freiraum neben der Heizungsumwälzpumpe, der in der Praxis ohnehin frei bleibt und ungenutzt ist.

Dabei ist es vorteilhaft, nicht nur die elektrischen Verbindungen zwischen Klemmenkasten und Motor bzw. zwischen Stecker oder Muffe und Anschlusskabel als Steckverbindung auszubilden, sondern darüber hinaus auch die mechanische Verbindung zwischen Klemmenkasten und Motor und/oder Pumpengehäuse. Dies kann dadurch erfolgen, dass mindestens eine Schnappverbindung zwischen diesen Bauteilen vorgesehen ist, wobei die Fügerichtung der Schnappverbindung mit der Fügerichtung des Erdungskontaktes übereinstimmt. Durch diese erdfindungsgemäße Ausbildung kann der Klemmenkasten werkzeugfrei aufgesteckt werden, wobei gleichzeitig mit Aufsteckung alle erforderlichen elektrischen Verbindungen zwischen Motor und Klemmenkasten geschlossen werden. Eine solche Anordnung ist insbesondere in der Großserienfertigung von Vorteil, da sie die Montage vereinfacht und verbilligt.

Vorteilhaft ist der Klemmenkasten so ausgebildet, dass er hermetisch gegenüber der Umgebung und auch gegenüber dem Motor abgedichtet ist. Dabei erfolgt die Abdichtung gegenüber den herauszuführenden elektrischen Kontakten zweckmäßigerweise durch Eingießen derselben in die Klemmenkastenwandung.

Da der Klemmenkasten vor dem hermetischen Verschließen die elektrischen elektronischen Bauteile aufnehmen muss, ist es zweckmäßig, diesen nach Art eines konventionellen Klemmenkastens aus zwei Bauteilen aufzubauen, so beispielsweise einen Klemmenkastengrundkörper mit Deckel. Diese sind dann gemäß einer vorteilhaften Weiterbildung der Erfindung aus thermoplastischem Kunststoff gebildet und durch Schweißen miteinander verbunden. Hierdurch entsteht ein vollständig geschlossener und nach außen hin hermetisch gekapselter Klemmenkasten. Dabei kann die Schweißung vorteilhaft durch Laserschweißen erfolgen, wenn beispielsweise der Deckel aus einem für den Laserstrahl durchgängigen und der Grundkörper aus einem für den Laserstrahl nicht durchgängigen Material gebildet ist. Dann kann die Schweißnaht, was fertigungstechnisch besonders günstig ist, durch den Deckel hindurch in der Trennfuge zwischen Deckel und Grundkörper gebildet werden, indem dort das Material durch den Laserstrahl aufgeschmolzen wird.

Die Erfindung ist nachfolgend anhand von in der Zeichnung dargestellten Ausführungsbeispielen näher erläutert. Es zeigen:
- Fig. 1: in vereinfachter perspektivischer Darstellung eine Heizungsumwälzpumpe gemäß der Erfindung,
- Fig. 2: einen Klemmenkasten mit radialen Erweiterungen in Darstellung entsprechend Fig. 1,
- Fig. 3: in perspektivischer Explosionsdarstellung Pumpe, Motor und Klemmenkasten,
- Fig. 4: in perspektivischer Explosionsdarstellung den Klemmenkasten gemäß Fig. 3 in seinem Aufbau,
- Fig. 5: eine perspektivische Ansicht des Klemmenkastens von unten,
- Fig. 6: eine perspektivische Längsschnittdarstellung von Klemmenkasten und Motor mit angesetztem Pumpenlaufrad,
- Fig. 7: in vergrößerter Darstellung einen Längsschnitt im Bereich des Erdungskontaktes zwischen Klemmenkasten und Motor und
- Fig. 8: in vergrößerter Darstellung eine Ansicht auf den Eckbereich des Motorgehäuseflansches von der Pumpenseite.

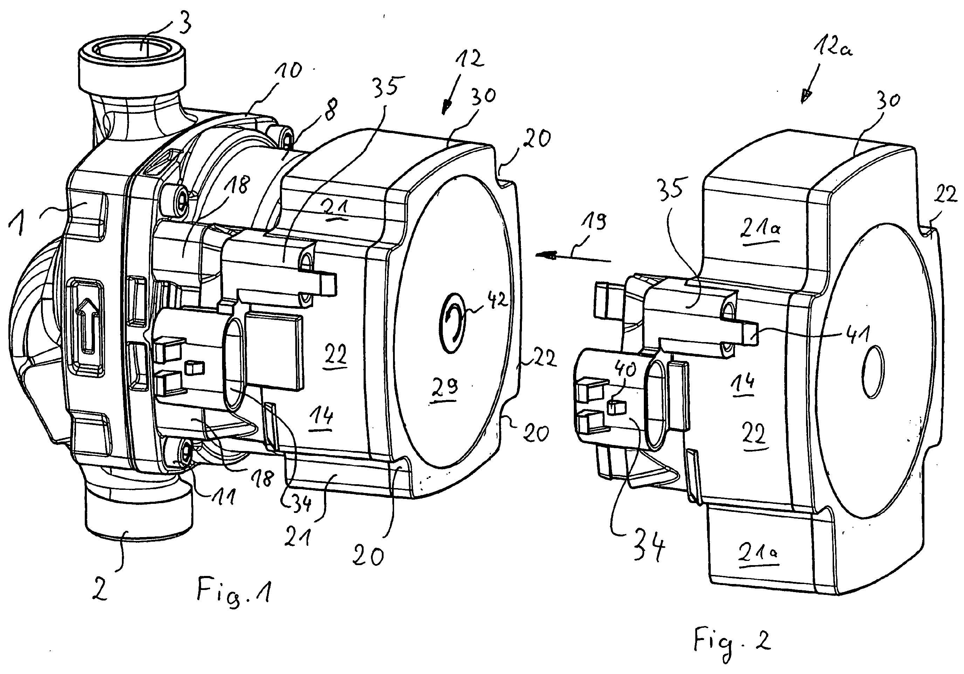

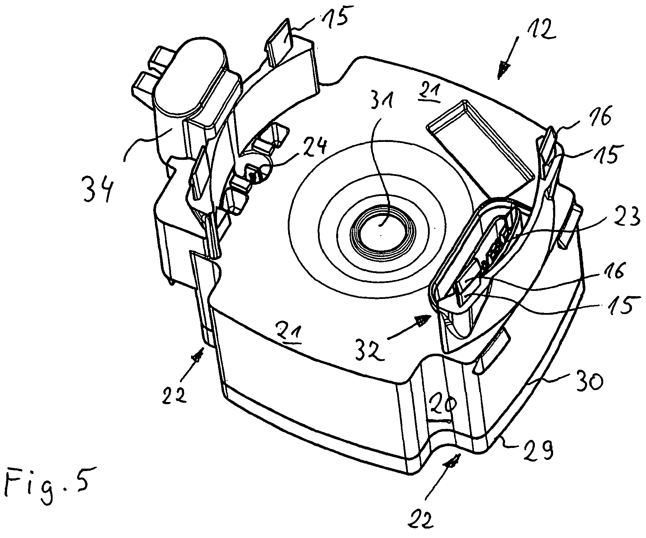

Die anhand der Figuren 1 und 3 bis 8 dargestellte Heizungsumwälzpumpe weist eine Kreiselpumpe mit einem Pumpengehäuse 1 mit einem Saugstutzen 2 und einem Druckstutzen 3 mit einer dazwischen ausgebildeten Kanalführung auf, welche die vom Saugstutzen 2 kommende Flüssigkeit einen Saugmund 4 eines innerhalb des Pumpengehäuse 1 gelagerten Pumpenlaufrads 5 zuführt, dessen Abtriebseite an einen zum Druckstutzen 3 führenden Kanal anschließt.

Die Heizungsumwälzpumpe weist weiterhin einen Motor auf, hier einem Nasslaufmotor, dessen Rotor 6 in einem Spaltrohr 7 läuft, das flüssigkeitsgefüllt ist. Umgeben wird das Spaltrohr 7 von einem Stator, d. h. von den umfangsseitig um das Spaltrohr 7 angeordneten Motorwicklungen, sowie einem Motorgehäuse 8, welches den Stator aufnimmt. Der Rotor 6 weist eine zentrale Welle 9 auf, die sich bis in das Pumpengehäuse 1 erstreckt und das Pumpenlaufrad 5 trägt, sodass die Drehbewegung des Rotors 6 auf das Pumpenlaufrad 5 übertragen wird.

Das Motorgehäuse 8 weist an seiner zum Pumpengehäuse 1 weisenden Seite einen Flansch 10 auf, mit dem es an das Pumpengehäuse 1 angeschlossen und über vier Schrauben 11 in den Eckbereichen des Flansches mit dem Pumpengehäuse 1 dicht und fest verbunden ist. In der dargestellten Ausführungsform bestehen Pumpengehäuse 1 und Motorgehäuse 8 aus Metall und sind als Gussteile gefertigt.

Bei den hier dargestellten Heizungsumwälzpumpen ist das Motorgehäuse 8 als metallisches Gussgehäuse ausgebildet. Für die vorliegende Erfindung kann das Gehäuse jedoch auch durch einen vergossenen Stator gebildet werden, wie dies dann der Fall ist, wenn die Statorwicklung in Kunststoff eingegossen ist. Auch kann das Motorgehäuse als Kunststoffspritzgussteil ausgebildet sein. Es versteht sich, dass dann der weiter unten im Einzelnen beschriebene Erdungskontakt gesondert innerhalb des Kunststoffes eingegliedert ist und elektrisch leitend mit dem Statorblechpaket und dem dann metallisch ausgebildeten Spaltrohr des Motors verbunden ist.

Die Heizungsumwälzpumpe weist weiterhin einen Klemmenkasten 12 auf, der aus Kunststoff besteht und an der vom Pumpengehäuse 1 abgewandten Axialseite des Motorgehäuses 8 angebracht ist und das Motorgehäuse 8 zu seiner Axialseite vollständig und radial, d. h. umfangsseitig, teilweise übergreift.

Die vorstehend und nachstehend aufgeführten Raumbezeichnungen axial und radial beziehen sich auf die Drehachse 13 des Rotors 6 bzw. des Pumpenlaufrades 5. Die Axialseiten sind also die Seiten, die zur Drehachse 13 im Wesentlichen senkrecht verlaufen, wohingegen Radialflächen die Flachen sind, welche sich parallel zur Drehachse erstrecken.

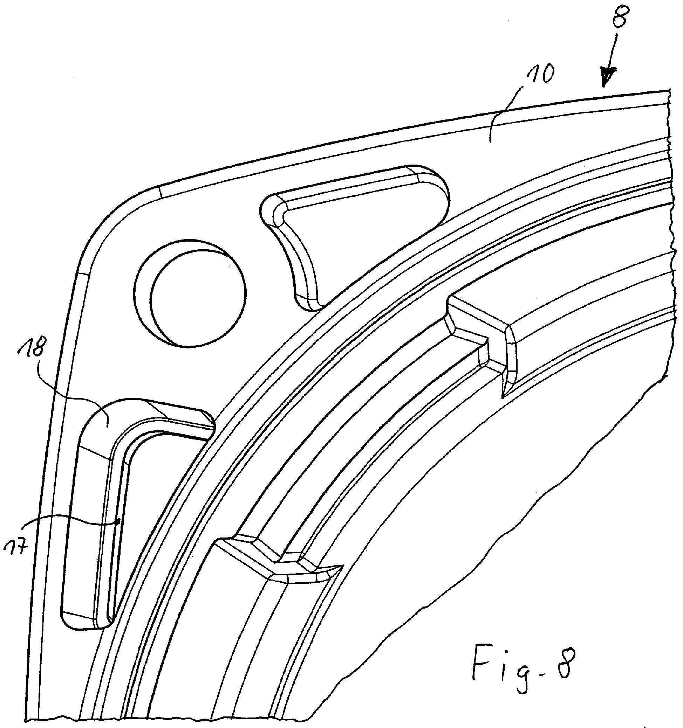

Das Motorgehäuse 8 weist im Flanschbereich einen abgerundeten im Wesentlichen quadratischen Querschnitt auf, wohingegen der übrige Teil des Motorgehäuses 8, also der sich zum Klemmenkasten 12 anschließende Teil im Wesentlichen einen kreisrunden Querschnitt aufweist und daher eine zylindermantelförmige Umfangsfläche aufweist. Während Pumpengehäuse 1 und Motorgehäuse 8 mittels vier Schrauben 11 lösbar miteinander verbunden sind, ist der aus Kunststoff bestehende Klemmenkasten 12 am Motorgehäuse 1 durch Schnappverbindungen befestigt. Hierzu weist der Klemmenkasten 12 vier sich aus den Seitenwandungen 14 des Klemmenkastens zum Pumpengehäuse 1 hin erstreckende Zungen 15 auf, an deren Ende seitlich Schnappvorsprünge 16 angeordnet sind, die Schnappausnehmungen 17 im Motorgehäuse 8 hintergreifen, welche am Motorgehäuse 8 im bereich des Flansches 10 angeformt sind. Diese Schnappausnehmungen 17 sind jeweils durch eine Stufe in einer rohrförmigen vom Flansch 10 zum Klemmenkasten 12 weisenden Führung 18 am Motorgehäuse 8 gebildet (siehe Fig. 8).

Beim Aufstecken des Klemmenkastens 12 auf das Motorgehäuse 8 in Achsrichtung, also in Aufsteckrichtung 19, gelangen die Zungen 15 in die fluchtend dazu angeordneten Führungen 18, wobei die Schnappvorsprünge 16 durch Querauslenkung der Zungen seitlich nach innen an den die Schnappausnehmungen 17 bildenden Stufen vorbeifahren und nach Überfahren derselben durch elastisches Rückstellen der Zungen 15 nach außen einrasten und damit den Klemmenkasten 12 auf dem Motorgehäuse 8 halten.

Der Klemmenkasten 12 hat in Richtung der Drehachse 13 gesehen, eine im Wesentlichen rechteckige Außenkontur und ist in den Eckbereichen, also im Bereich gedachter axialer Verlängerungen der Schrauben 11 ausgespart ausgebildet, damit die Schrauben 11 auch bei aufgesetzten Klemmenkasten 12 für ein aus Axialrichtung aufgesetztes Werkzeug zugänglich sind. Diese Eckausnehmungen sind mit 20 gekennzeichnet.

Bei dieser Formgebung ergeben sich bei der dargestellten vertikalen Einbaulage (Saugstutzen 2 und Druckstutzen 3 liegen vertikal übereinander) horizontale Randbereiche 21 und vertikale Randbereiche 22 des Klemmenkastens 12.

Die vertikalen Randbereiche 22 werden bei der dargestellten Ausführungsform zur Herausführung elektrischer Kontakte genutzt, wohingegen die horizontalen Randbereich 21 zur Anordnung von Elektronikbauteilen innerhalb des Klemmenkastens genutzt werden. Da baugleiche Pumpen mit Elektromotoren mit unterschiedlicher Motorelektronik ausgestattet werden können, kann, wie beim Vergleich der Darstellung gemäß Fig. 1 und Fig. 2 deutlich wird, bei Verwendung unterschiedlicher Klemmenkästen, die sich ausschließlich in der radialen Erstreckung der horizontalen Randbereiche 21 unterscheiden, das Innenvolumen des Klemmenkastens variiert werden, ohne dass die elektrischen Anschlüsse hier geändert werden müssen, und zwar weder motorseitig noch klemmenkastenseitig. Die erweiterten horizontalen Randbereiche in Fig. 2 sind mit 21a gekennzeichnet, der Klemmenkasten mit 12a.

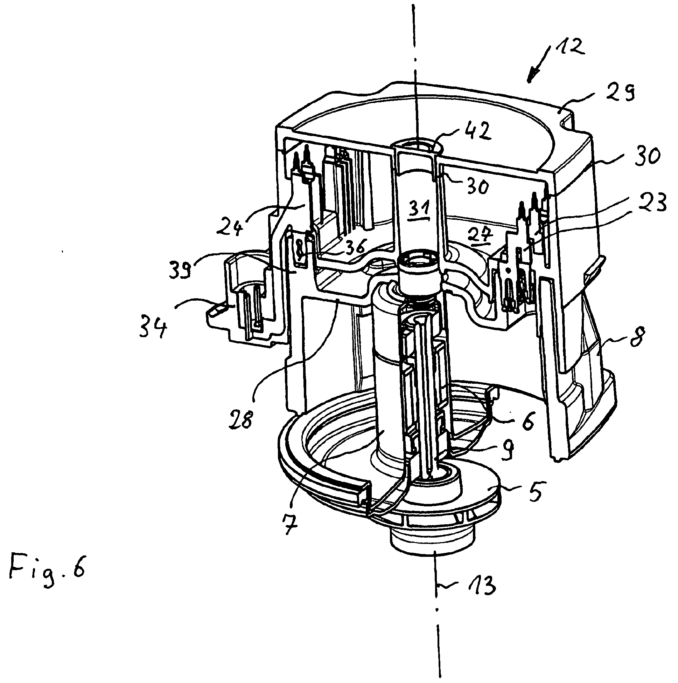

In den vertikalen Randbereichen 22 sind die elektrischen Kontakte angeordnet, und zwar in Achsrichtung vom Klemmenkasten 12 in Richtung zum Pumpengehäuse 1 gesehen sind in dem rechten vertikalen Randbereich 22 die zur Motorwicklung führenden Kontakte 23 und im linken vertikalen Randbereich 22 die zu einem Steckanschluss vom elektrischen Anschluss des Motors herausgeführten Kontakte 24 angeordnet. Diese Kontakte 23 und 24 sind in der Schnittdarstellung gemäß Fig. 6 zu erkennen. Sie sind jeweils aus Blech, also als Stanzteile gebildet und gruppenweise gleich ausgebildet, d. h. alle Kontakte 23 sind zueinander baugleich sowie alle Kontakte 24 sind untereinander baugleich.

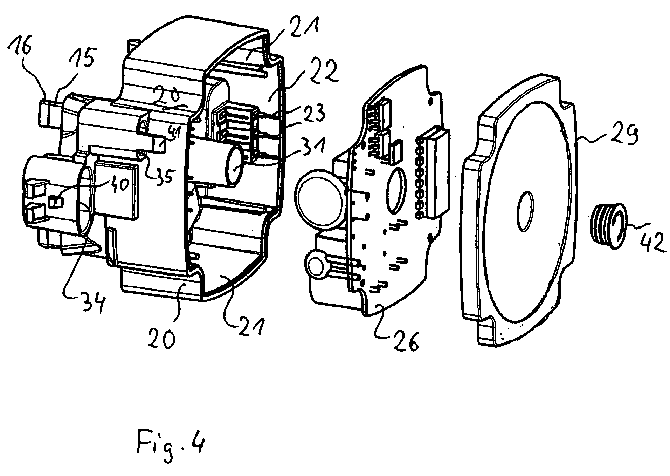

Alle Kontakte 23 und 24 sowie die weiteren an der linken Seite in dem vertikalen Randbereich 22 angeordneten Kontakte 25, welche zur Motorsteuerung dienen, enden im Klemmenkasten 12 an einer Platine 26, die in der Darstellung nach Fig. 6 aus Übersichtsgründen nicht dargestellt ist, jedoch in der Explosionsdarstellung gemäß Fig. 4 sichtbar ist und welche die elektrischen und elektronischen Bauteile der Motorsteuerung trägt, hier insbesondere einen Frequenzumrichter.

Die Kontakte 23, 24 und 25 sind dicht in den aus thermoplastischem Kunststoff gebildeten Klemmenkasten 12 eingegossen und zwar die Kontakte 23 in den Boden 27 des Klemmenkastens 12 und die Kontakte 24 und 25 in den Boden 27 bzw. die daran angrenzende Seitenwand 14.

Der Boden 27 des Klemmenkastens 12 ist vollständig geschlossen ausgebildet und zur Axialwand 28 des Motorgehäuses 8 beabstandet ausgebildet 8 (siehe Fig. 6). Der Boden 27 geht in die ebenfalls geschlossenen Seitenwände 14 über, das axiale Ende der Seitenwände 14 ist durch einen Deckel 29 abgeschlossen, der ebenfalls geschlossen ausgebildet ist (geschlossen bezogen auf das Klemmenkasteninnere). Der Deckel 29 ist durch eine umlaufende Schweißnaht 30 stoffschlüssig mit dem aus Boden 27 und Wandungen 14 bestehenden Grundkörper des Klemmenkastens 12 verbunden. Auf diese Weise ist das Klemmenkasteninnere nicht nur dicht, sondern hermetisch abgeschlossen, d. h. die darin befindliche und empfindliche Elektronik ist zuverlässig gegen Eindringen von Staub, Wasser und Gasen geschützt.

Die Schweißnaht 30 ist durch Laserschweißen von der Deckelseite ausgebildet. Hierzu ist der Deckel 29 aus einem für den Laserstrahl durchlässigem Material gefertigt, wohingegen der Grundkörper, also der Boden 27 und die Seitenwände 14, aus einem für den Laserstrahl im Wesentlichen undurchlässigem Material gefertigt sind. Die Schweißung erfolgt der Gestalt, dass der Laserstrahl von der Deckelseite aus auf die zum Deckel weisenden Stirnseiten der Seitenwände 14 gerichtet wird. Dabei gelangt der Laserstrahl durch den für den Laserstrahl durchlässigen Deckel 29 bis zu den Stirnseiten der Seitenwände 14, wo er das Material aufschmilzt, das aufgrund der Wärmeeinwirkung auch mit dem Deckelmaterial verschmilzt und auf diese Weise eine hermetische Schweißverbindung zwischen den Seitenwänden 14 und dem Deckel 29 bildet, wodurch der Klemmenkasten 12 nach außen hin hermetisch abgeschlossen ist. Dabei erfolgt die Verschweißung nicht nur im Bereich der außen liegenden Wände 14 sondern auch im Bereich der zentralen Ausnehmung 31, also an einer sonst zum Schweißen extrem schlecht zugänglichen Stelle.

Der Klemmenkasten 12 ist durch eine zentrale Ausnehmung 31 durchsetzt, welche in axialer Richtung verläuft, durch einen Stopfen 42 abgeschlossen ist und nicht mit dem Inneren des Klemmenkastens verbunden ist. Diese Ausnehmung 31 führt zu einer ebenfalls mittels einer Schraube verschlossenen Öffnung in der Axialwand 28 des Motorgehäuses 8, über welche das freie Ende der Welle 9 zugänglich ist, um bei einem Blockieren des Rotors 6 diesen von Hand frei drehen zu können. Die diese Öffnung verschließende Schraube ist als eine Art Madenschraube mit Innensechskant ausgebildet, wobei die Innensechskantaufnahme so ausgebildet ist, dass die Schraube beim Entfernen am Werkzeug verbleibt, sodass bei Entfernen des Stopfens 42 mittels eines Schlüssels diese Schraube entfernt und dann mittels eines weiteren Werkzeugs die Welle 9 manuell gedreht werden kann. In umgekehrter Reihenfolge werden die Öffnungen dann wieder verschlossen. Die Ausnehmung 31 durchsetzt den Klemmenkasten 12 also in axialer Richtung, sodass sich ein hermetisch abgeschlossener Ringraum im Klemmenkasten 12 ergibt.

Soweit es die zur Verbindung mit der Motorwicklung vorgesehenen Kontakte 23 angeht, sind diese nach Art einer Muffe 32 in den Boden des Klemmenkastens 12 und zwar in dem rechten vertikalen Randbereich 22 eingeformt. Am Motorgehäuse 8 ist ein an der Axialwand 28 axial zum Klemmenkasten 12 vorspringender Stecker 33 ausgebildet, welcher beim Aufstecken des Klemmenskastens 12 auf das Motorgehäuse 8 mit der Muffe 32 verbunden wird, worüber die elektrische Verbindung zwischen Klemmenkasten 12 und Motorwicklung hergestellt wird.

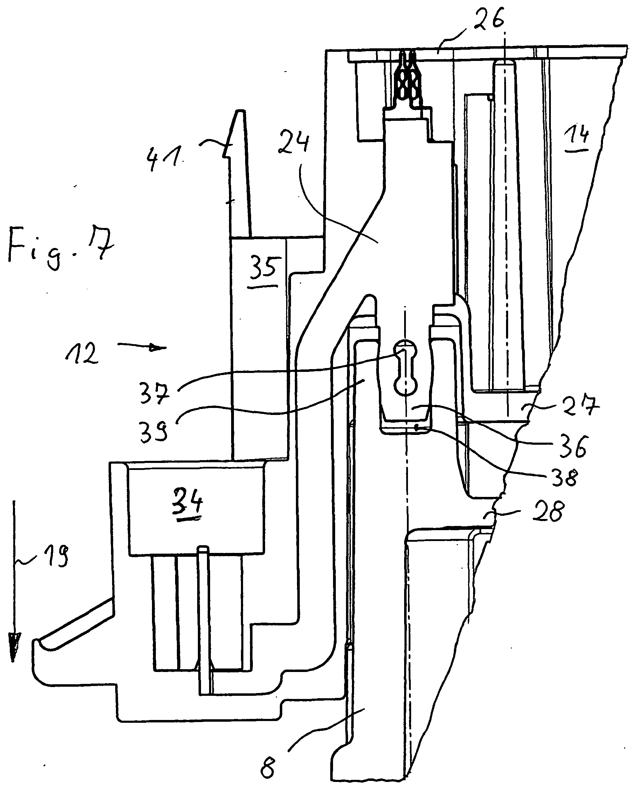

Auf der gegenüberliegenden linken Seite des vertikalen Randbereichs 22 des Klemmenkastens 12 sind die Kontakte 24 mit einem Bein zu einer Muffe 34 und die Kontakte 25 zu einer Muffe 35 herausgeführt. Einer der Kontakte 24, nämlich der in Fig. 7 dargestellte, ist ein Erdungskontakt und dient dazu, das metallische Motorgehäuse 8 mit dem entsprechenden Erdungsanschluss der Muffe 34 bzw. mit dem entsprechenden Erdungsanschluss auf der Platine 26 innerhalb des Klemmenkastens 12 zu verbinden. Hierzu weist der Kontakt 24 an einem Bein einen Steckteil 36 auf, der eine in der Blechebene leicht ballige Form hat sowie eine zentrale Längsausnehmung 37 in Steckrichtung des Steckteils 36. Fluchtend zu dem Steckteil 36 des Erdungskontaktes ist eine muffenartige Ausnehmung 38 in einer axialen Erhebung 39 an der Axialwand 28 des Motorgehäuses 8 vorgesehen. Die Querabmessung der Ausnehmung 38 ist geringfügig kleiner als die Quererstreckung des Steckteils 36 in dem balligen Bereich, sodass beim Einstecken des Steckteils 36 in die Ausnehmung 38 der Steckteil zumindest elastisch, möglicherweise auch plastisch verformt wird, wodurch ein inniger Kontakt zwischen Steckteil 36 und Ausnehmung 38 im Motorgehäuse 8 und somit eine zuverlässige Erdung sichergestellt wird. Damit der Steckteil 36 sich gegebenenfalls auch plastisch verformen kann, ist die Ausnehmung 37 vorgesehen.

Die Nichterdungskontakte 24, die von der Formgebung identisch mit dem Erdungskontakt ausgebildet sind, weisen ebenfalls ein Steckteil 36 mit Ausnehmung 37 auf, sind jedoch in dem Bereich des Steckteils 36 von Kunststoff umgossen, motorseitig ist hier ein Freiraum, da die Erhebung 39 quasi punktuell nur im Bereich des Steckteils 36 des Erdungskontaktes vorgesehen.

Die Kontakte 24 und somit insbesondere auch der Erdungskontakt, der eine innige Verbindung mit dem Motorgehäuse 8 hat, ist in dem Boden 27 bzw. in der Seitenwand 14 zu zwei Beinen abgezweigt ausgebildet (siehe Fig. 7) und verläuft schräg aus dem Klemmenkasten heraus zum Pumpengehäuse 1 hin, parallel am Außenumfang des Motorgehäuses 8 entlang, endet jedoch mit Abstand vor dem Flansch 10 des Motors und ist dort um 180° abgewinkelt, wo die Kontakte 24 zusammen die Muffe 34 bilden, welche zur Aufnahme eines Anschlusssteckers am Ende eines Kabels einer elektrischen Versorgungsleitung dient. Das Gehäuse der Muffe 34 ist einstückig mit dem Klemmenkasten 12 ausgebildet. Die Muffe 34 ist versetzt zum Klemmenkasten 12 neben dem Motorgehäuse 8 am Außenumfang desselben angeordnet. Ein in diese Muffe 34 eingreifender Stecker ist in Axialrichtung, und zwar in Richtung auf das Pumpengehäuse 1 einsteckbar und liegt dann neben dem Klemmenkasten 12, und zwar neben dem linken vertikalen Randbereich 22. Die Muffe 34 weist einen Schnappvorsprung 40, der Teil einer Schnappverbindung ist, deren anderer Teil am Gegenstück, also dem Stecker, vorgesehen ist.

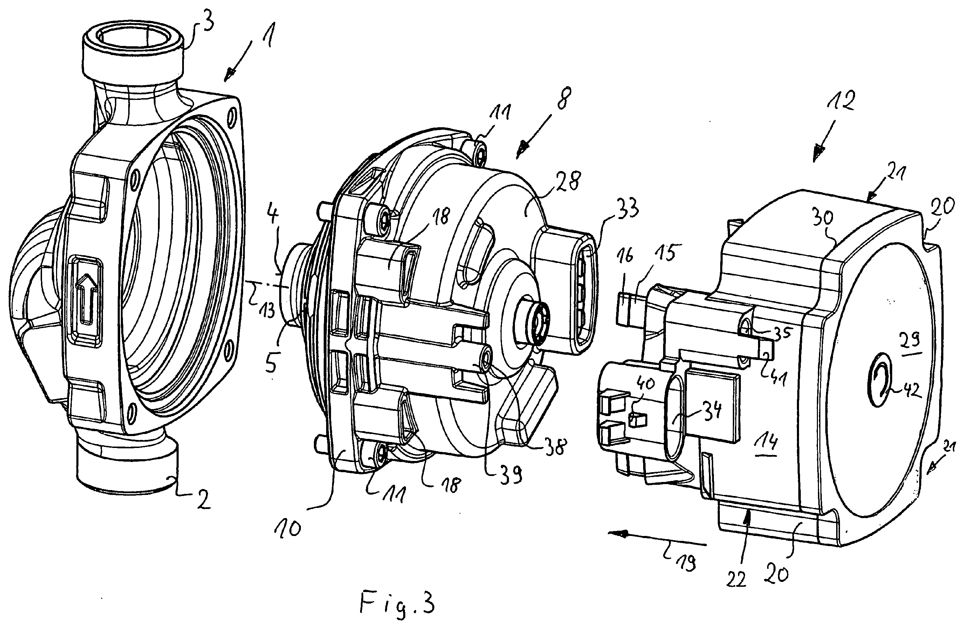

Die Muffe 35, welche die Kontakte 25 aufnimmt, ist in ähnlicher Weise aus dem Klemmenkasten herausgeführt, jedoch durch die Seitenwand 14. Die dort gebildete Muffe 35 liegt in der Darstellung gemäß Fig. 3 an dem linken vertikalen Randbereich 22 am Außenumfang des Klemmenkastens 12 an, ist jedoch anders als die Muffe 34 nicht zum Motorgehäuse 8 hin versetzt angeordnet, sondern liegt direkt neben dem Klemmenkasten 12. Dort weist die Muffe 35 einen Schnappvorsprung 41 auf, welcher den in diese Muffe eingreifenden Stecker gegen Lösen sichert. Die Muffen 34 und 35 sind wie die Muffe 32 einstückig mit dem Klemmenkasten 12 im Kunststoffspritzgussverfahren hergestellt, also durch Umspritzen der Kontakte 23, 24, 25 bei der Herstellung des Klemmenkastengrundkörpers.

Die Muffen 34 und 35 sind als Flachmuffen ausgebildet, derart, dass ihre Kontakte 24 bzw. 25 jeweils nebeneinander in einer im Wesentlichen parallel zum Motorgehäuse 8 angeordneten Ebene befindlich sind. Durch diese Anordnung ist der radiale Bauraum neben dem Motorgehäuse 8 bzw. Klemmenkasten 12 vergleichsweise klein.

Wenn das Motorgehäuse nicht als metallisches Gussgehäuse sondern als Kunststoffgehäuse oder als den Stator umgebene Vergussmasse ausgebildet ist, dann ist die Ausnehmung 38 in der Erhebung des Motorgehäuses mit einem Kontakt versehen, beispielsweise durch eine hohlzylindrische metallische Muffe gebildet, die elektrisch leitend mit dem Statorblechpaket und dem metallischen Spaltrohr 7 verbunden ist, um die elektrische Sicherheit der Heizungsumwälzpumpe für den Fall, dass eines dieser Bauteile durch einen Statordefekt Spannung führt, gewährleistet ist.

### Bezugszeichenliste

- 1: - Pumpengehäuses
- 2: - Saugstutzen
- 3: - Druckstutzen
- 4: - Saugmund
- 5: - Pumpenlaufrad
- 6: - Rotor
- 7: - Spaltrohr
- 8: - Motorgehäuse
- 9: - Welle
- 10: - Flansch von 8
- 11: - Schrauben
- 12: - Klemmenkasten
- 12a: - Klemmenkasten in Fig. 2
- 13: - Drehachse von 9 und 5
- 14: - Seitenwand des Klemmenkastens
- 15: - Zungen von 12
- 16: - Schnappvorsprünge an den Zungen
- 17: - Schnappausnehmungen
- 18: - Führungen
- 19: - Aufsteckrichtung
- 20: - Eckausnehmungen
- 21: - horizontale Randbereiche des Klemmenkastens
- 21a: - horizontale Randbereiche des Klemmenkastens in Fig. 2
- 22: - vertikale Randbereiche
- 23: - Kontakte zum Motor
- 24: - Kontakte zur externen Stromversorgung
- 25: - Kontakte für die Motorsteuerung
- 26: - Platine
- 27: - Boden des Klemmenkastens
- 28: - Axialwand des Motorgehäuses
- 29: - Deckel des Klemmenkastens
- 30: - Schweißnaht
- 31: - zentrale Ausnehmung im Klemmenkasten
- 32: - Muffe im Boden des Klemmenkastens
- 33: - Stecker am Motorgehäuse
- 34: - Muffe der Kontakte 24
- 35: - Muffe der Kontakte 25
- 36: - Steckteil des Kontaktes 24
- 37: - Ausnehmung im Steckteil
- 38: - Ausnehmung in der Erhebung 39
- 39: - Erhebung am Motorgehäuse
- 40: - Schnappvorsprung an der Muffe 34
- 41: - Schnappvorsprung an der Muffe 35
- 42: - Stopfen für die Ausnehmung 31

## Patentansprüche

1. Heizungsumwälzpumpe mit einem Pumpengehäuse (1) mit darin angeordnetem Pumpenlaufrad (5), das von einem Elektromotor angetrieben ist, der in einem mit dem Pumpengehäuse (1) verbundenen Motorgehäuse (8) angeordnet ist, und mit einem am Motorgehäuse (8) befestigten Klemmenkasten (12) aus Kunststoff zur Aufnahme von elektrischen und/oder elektronischen Bauteilen der Motorsteuerung sowie zum elektrischen Anschluss des Motors, mit einem am Motorgehäuse (8) angeordneten Erdungskontakt, und mit einem außen am Klemmenkasten (12) angeordneten Stecker oder einer Muffe (34) einer elektrischen Steckverbindung zum elektrischen Anschluss, wobei der Erdungskontakt elektrisch leitend mit einem Erdungskontakt (24) des Steckers oder der Muffe (34) sowie mit mindestens einem Leiter im Inneren des Klemmenkastens (12) verbunden ist, **dadurch gekennzeichnet, dass** die elektrische Verbindung zwischen dem am Motorgehäuse (8) angeordneten Erdungskontakt und dem Erdungskontakt (24) des Steckers oder der Muffe (34) außerhalb des Klemmenkastens (12) angeordnet ist.

2. Heizungsumwälzpumpe nach Anspruch 1, **dadurch gekennzeichnet, dass** der Erdungskontakt (24) des Steckers oder der Muffe (34) abgezweigt ausgebildet ist, wobei die Abzweigung außerhalb des Klemmenkastens (12) oder innerhalb der Klemmenkastenwandung (14, 27) liegt.

3. Heizungsumwälzpumpe nach Anspruch 2, **dadurch gekennzeichnet, dass** die Abzweigung in einer Seitenwand (14) oder im Boden (27) des Klemmenkastens (12) vorgesehen ist.

4. Heizungsumwälzpumpe nach einem der vorhergehenden Ansprüche, **dadurch gekennzeichnet, dass** der in das Innere des Klemmenkastens (12) führende Teil des Erdungskontaktes (24) einen kleineren Querschnitt als der zum Stecker oder zur Muffe (34) führende Teil hat.

5. Heizungsumwälzpumpe nach einem der vorhergehenden Ansprüche, **dadurch gekennzeichnet, dass** der Erdungskontakt (24) zu zwei Kontaktbeinen abgezweigt ist, von denen ein Bein in das Motorgehäuse (8) eingreift und das andere Bein an der Außenseite des Motorgehäuses (8) mit Abstand dazu angeordnet ist.

6. Heizungsumwälzpumpe nach einem der vorhergehenden Ansprüche, **dadurch gekennzeichnet, dass** der Kontakt (24) als Blechteil ausgebildet ist.

7. Heizungsumwälzpumpe nach Anspruch 6, **dadurch gekennzeichnet, dass** der Kontakt (24) als Stanzteil ausgebildet ist.

8. Heizungsumwälzpumpe nach einem der vorangehenden Ansprüche, **dadurch gekennzeichnet, dass** der Stecker oder die Muffe (34) zwei oder mehr zueinander elektrisch isolierte Kontakte (24) aufweist, die baugleich und mit Abstand zueinander angeordnet sind, wobei die Nichterdungskontakte auch zum Motorgehäuse (8) hin in Kunststoff eingebettet sind, der Teil des Klemmenkastens (12) und /oder des Steckers bzw. der Muffe (34) bildet.

9. Heizungsumwälzpumpe nach einem der vorhergehenden Ansprüche, **dadurch gekennzeichnet, dass** der Erdungskontakt (24) motorseitig in einer gegenüber der übrigen Wandung der Motorgehäuse erhabenen Vorsprung (39) eingreift.

10. Heizungsumwälzpumpe nach einem der vorhergehenden Ansprüche, **dadurch gekennzeichnet, dass** der Erdungskontakt (24) quer zur Einsteckrichtung (19) mindestens einseitig aufgeweitet ausgebildet ist und in Höhe des aufgeweiteten Bereichs eine Materialausnehmung (37) aufweist.

11. Heizungsumwälzpumpe nach einem der vorhergehenden Ansprüche, **dadurch gekennzeichnet, dass** der Klemmenkasten (12) an der vom Pumpengehäuse (1) abgewandten Axialseite des Motorgehäuses (8) anschließt und der Stecker oder die Muffe (34) an der radialen Außenseite von Motorgehäuse (8) und/oder Klemmenkasten (12) angeordnet ist.

12. Heizungsumwälzpumpe nach einem der vorhergehenden Ansprüche, **dadurch gekennzeichnet, dass** der Stecker oder die Muffe (34) versetzt zum Klemmenkasten (12) neben dem Motorgehäuse (8) derart angeordnet ist, dass die Steckrichtung (19) parallel zur Drehachse (13) von Motor und Pumpe ist.

13. Heizungsumwälzpumpe nach einem der vorhergehenden Ansprüche, **dadurch gekennzeichnet, dass** der Klemmenkasten (12) über mindestens eine Schnappverbindung (16, 17) mit dem Motor- und/oder Pumpengehäuse (1, 8) verbunden ist, wobei die Fügerichtung (19) der Schnappverbindung (16, 17) mit der Fügerichtung (19) des Erdungskontaktes (24) übereinstimmt.

14. Heizungsumwälzpumpe nach einem der vorhergehenden Ansprüche, **dadurch gekennzeichnet, dass** der Klemmenkasten (12) zum Motor und zur Umgebung hin hermetisch abgeschlossen ausgebildet ist.

15. Heizungsumwälzpumpe nach einem der vorhergehenden Ansprüche, **dadurch gekennzeichnet, dass** der Klemmenkasten (12) aus zwei thermoplastischen Bauelementen (14, 27 und 29) besteht, die durch Schweißen zu einem hermetisch abgeschlossenen Klemmenkasten (12) verbunden sind.

## Claims

1. A heating circulation pump with a pump housing (1) with a pump impeller (5) which is arranged therein and which is driven by an electric motor arranged in a motor housing (8) connected to the pump housing (1), and with a terminal box (12) of plastic which is fastened on the motor housing (8) and is for receiving electrical and/or electronic components of the motor control as well as for the electrical connection of the motor, with an earthing contact arranged on the motor housing (8) and with a plug or socket (34) of an electric plug-in connection for the electric connection, said plug or socket being arranged at the outside on the terminal box (12), wherein the earthing contact is connected in an electrically conductive manner to the earthing contact (24) of the plug or of the socket (34) as well as to at least one lead in the inside of the terminal box (12), **characterised in that** the electric connection between the earthing contact arranged on the motor housing (8), and the earthing contact (24) of the plug or of the socket (34) is arranged outside the terminal box (12).

2. A heating circulation pump according to claim 1, **characterised in that** the earthing contact (24) of the plug or of the socket (34) is designed in a branched manner, wherein the branching lies outside the terminal box (12) or within the terminal box wall (14, 27).

3. A heating circulation pump according to claim 2, **characterised in that** the branching is provided in a side wall (14) or in the base (27) of the terminal box (12).

4. A heating circulation pump according to one of the preceding claims, **characterised in that** the part of the earthing contact (24) which leads into the inside of the terminal box (12) has a smaller cross section than the part leading to the plug or to the socket (34).

5. A heating circulation pump according to one of the preceding claims, **characterised in that** the earthing contact (24) is branched into two contact legs, of which one leg engages into the motor housing (8), and the other leg is arranged on the outer side of the motor housing (8) at a distance thereto.

6. A heating circulation pump according to one of the preceding claims, **characterised in that** the contact (24) is designed as a sheet metal part.

7. A heating circulation pump according to claim 6, **characterised in that** the contact (24) is designed as a punched part.

8. A heating circulation pump according to one of the preceding claims, **characterised in that** the plug or the socket (34) comprises two or more contacts (24) which are electrically insulated to one another, are constructionally identical and are arranged at a distance to one another, wherein the non-earthing contacts are also embedded in plastic towards the motor housing (8), said plastic forming part of the terminal box (12) and/or of the plug or of the socket (34).

9. A heating circulation pump according to one of the preceding claims, **characterised in that** the earthing contact (24) on the motor side engages into a projection (39) which is raised with respect to the remaining wall of the motor housing (39).

10. A heating circulation pump according to one of the preceding claims, **characterised in that** the earthing contact (24) is designed widened at least on one side, transversely to the insert direction (19), and has a material recess (37) at the height of the widened region.

11. A heating circulation pump according to one of the preceding claims, **characterised in that** the terminal box (12) connects on the axial side of the motor housing (8) which is away from the pump housing (1), and the plug or the socket (34) is arranged on the radial outer side of the motor housing (8) and/or of the terminal box (12).

12. A heating circulation pump according to one of the preceding claims, **characterised in that** the plug or the socket (34) is arranged displaced to the terminal box (12), next to the motor housing (8), in a manner such that the plug-in direction (19) is parallel to the rotation axis (13) of the motor and pump.

13. A heating circulation pump according to one of the preceding claims, **characterised in that** the terminal box (12) is connected to the motor housing and/or pump housing (1, 8) via at least one snap connection (16, 17), wherein the joining direction (19) of the snap connection (16, 17) corresponds to the joining direction (19) of the earthing contact (24).

14. A heating circulation pump according to one of the preceding claims, **characterised in that** the terminal box (12) is designed in a hermetically closed manner to the motor and to the surroundings.

15. A heating circulation pump according to one of the preceding claims, **characterised in that** the terminal box (12) consists of two thermoplastic components (14, 27 and 29) which are connected to a hermetically closed-off terminal box (12) by way of welding.

## Revendications

1. Pompe de circulation de chauffage comprenant un corps de pompe (1) à l'intérieur duquel est placé un rotor de pompe (5) qui est entraîné par un moteur électrique placé dans un carter de moteur (8) relié au corps de pompe (1), et une boîte à bornes (12) en matière plastique fixée sur le carter de moteur (8) et destinée au logement des composants électriques et/ou électroniques de la commande de moteur ainsi qu'au raccordement électrique du moteur, un contact de mise à la terre étant disposé sur le carter de moteur (8), et un connecteur ou un manchon (34) d'une connexion électrique enfichable pour le raccordement électrique étant placé à l'extérieur sur la boîte à bornes (12), le contact de mise à la terre étant relié de manière électriquement conductrice à un contact de mise à la terre (24) du connecteur ou du manchon (34) ainsi qu'à au moins un conducteur à l'intérieur de la boîte à bornes (12), **caractérisée en ce que** la connexion électrique entre le contact de mise à la terre placé sur le carter de moteur (8) et le contact de mise à la terre (24) du connecteur ou du manchon (34) est disposée à l'extérieur de la boîte à bornes (12).

2. Pompe de circulation de chauffage selon la revendication 1, **caractérisée en ce que** le contact de mise à la terre (24) du connecteur ou du manchon (34) est réalisé de façon dérivée, la dérivation étant située à l'extérieur de la boîte à bornes (12) ou à l'intérieur de la paroi (14, 27) de la boîte à bornes.

3. Pompe de circulation de chauffage selon la revendication 2, **caractérisée en ce que** la dérivation est prévue dans une paroi latérale (14) ou dans le fond (27) de la boîte à bornes (12).

4. Pompe de circulation de chauffage selon l'une des revendications précédentes, **caractérisée en ce que** la partie du contact de mise à la terre (24) menant à l'intérieur de la boîte à bornes (12) présente une section transversale plus petite que la partie menant au connecteur ou au manchon (34).

5. Pompe de circulation de chauffage selon l'une des revendications précédentes, **caractérisée en ce que** le contact de mise à la terre (24) est dérivé vers deux pattes de contact, dont une patte s'engage dans le carter de moteur (8) et l'autre patte est disposée sur la face extérieure du carter de moteur (8) à distance de celui-ci.

6. Pompe de circulation de chauffage selon l'une des revendications précédentes, **caractérisée en ce que** le contact (24) est réalisé sous la forme d'une pièce en tôle.

7. Pompe de circulation de chauffage selon la revendication 6, **caractérisée en ce que** le contact (24) est réalisé sous la forme d'une pièce estampée.

8. Pompe de circulation de chauffage selon l'une des revendications précédentes, **caractérisée en ce que** le connecteur ou le manchon (34) présente deux contacts (24) électriquement isolés entre eux ou plus, qui sont identiques et placés à distance les uns des autres, les contacts non reliés à la terre, également en direction du carter de moteur (8), étant noyés dans la matière plastique qui fait partie de la boîte à bornes (12) et/ou du connecteur ou du manchon (34).

9. Pompe de circulation de chauffage selon l'une des revendications précédentes, **caractérisée en ce que** le contact de mise à la terre (24) vient en prise, côté moteur, dans une saillie (39) en relief par rapport au reste de la paroi du carter de moteur.

10. Pompe de circulation de chauffage selon l'une des revendications précédentes, **caractérisée en ce que** le contact de mise à la terre (24) est évasé, au moins sur un côté, transversalement à la direction d'enfichage (19), et présente au niveau de la région évasée un évidement de matière (37).

11. Pompe de circulation de chauffage selon l'une des revendications précédentes, **caractérisée en ce que** la boîte à bornes (12) se raccorde au côté axial du carter de moteur (8) opposé au corps de pompe (1) et **en ce que** le connecteur ou le manchon (34) est disposé sur le côté extérieur radial du carter de moteur (8) et/ou de la boîte à bornes (12).

12. Pompe de circulation de chauffage selon l'une des revendications précédentes, **caractérisée en ce que** le connecteur ou le manchon (34) est disposé de manière décalée par rapport à la boîte à bornes (12) à proximité du carter de moteur (8) de telle sorte que la direction d'enfichage (19) est parallèle à l'axe de rotation (13) du moteur et de la pompe.

13. Pompe de circulation de chauffage selon l'une des revendications précédentes, **caractérisée en ce que** la boîte à bornes (12) est reliée au carter de moteur et/ou au corps de pompe (1,8) par l'intermédiaire d'au moins une liaison par encliquetage (16, 17), la direction d'assemblage (19) de la liaison par encliquetage (16, 17) coïncidant avec la direction d'assemblage (19) du contact de mise à la terre (24).

14. Pompe de circulation de chauffage selon l'une des revendications précédentes, **caractérisée en ce que** la boîte à bornes (12) est hermétiquement fermée vis-à-vis du moteur et de l'environnement.

15. Pompe de circulation de chauffage selon l'une des revendications précédentes, **caractérisée en ce que** la boîte à bornes (12) est constituée de deux composants thermoplastiques (14, 27 et 29) qui sont reliés par soudure pour former une boîte à bornes (12) hermétiquement fermée.
